# EUROPEAN PATENT SPECIFICATION

(11) **EP 3 818 713 B1**
(45) Date of publication and mention of the grant of the patent: **10.01.2024**
(21) Application number: 19733499.8
(22) Date of filing: 27.06.2019
(51) Int. Cl.: H04N 19/55, H04N 19/563

(54) **APPARATUS FOR BLOCK-BASED PREDICTIVE VIDEO CODING**
VORRICHTUNG ZUR BLOCKBASIERTEN PRÄDIKTIVEN VIDEOKODIERUNG
APPAREIL DE CODAGE PRÉDICTIF DE VIDÉO À BASE DE BLOCS

(30) Priority: 02.07.2018 EP 18181296
(43) Date of publication of application: 12.05.2021
(73) Proprietor: Fraunhofer-Gesellschaft zur Förderung der angewandten Forschung e.V., 80686 München (DE)
(72) Inventor: BRANDENBURG, Jens, 10587 Berlin (DE); SKUPIN, Robert, 10587 Berlin (DE); WIECKOWSKI, Adam, 10587 Berlin (DE); SÁNCHEZ DE LA FUENTE, Yago, 10587 Berlin (DE); HINZ, Tobias, 10587 Berlin (DE); GEORGE, Valeri, 10365 Berlin (DE); SCHIERL, Thomas, 10587 Berlin (DE); WIEGAND, Thomas, 10587 Berlin (DE); SCHWARZ, Heiko, 10587 Berlin (DE); MARPE, Detlev, 10587 Berlin (DE); MA, Jackie, 10587 Berlin (DE)
(74) Representative: Schenk, Markus
(86) International application number: PCT/EP2019/067240
(87) International publication number: WO 2020/007717

(56) References cited:
- YANG H ET AL: "Description of Core Experiment 4 (CE4): Inter prediction and motion vector coding", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J1024-v3, 28 May 2018 (2018-05-28), XP030151319,
- Y-W CHEN ET AL: "Description of SDR, HDR and 360° video coding technology proposal by Qualcomm and Technicolor "" low and high complexity versions", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0021-v5, 14 April 2018 (2018-04-14), XP030151184, cited in the application
- ALBRECHT M ET AL: "Description of SDR, HDR and 360° video coding technology proposal by Fraunhofer HHI", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0014-v4, 12 April 2018 (2018-04-12), XP030151173,

## Description

### INTRODUCTRY REMARKS

In the following, different inventive embodiments and aspects will be described in a chapter "DETAILED DESCRIPTION".

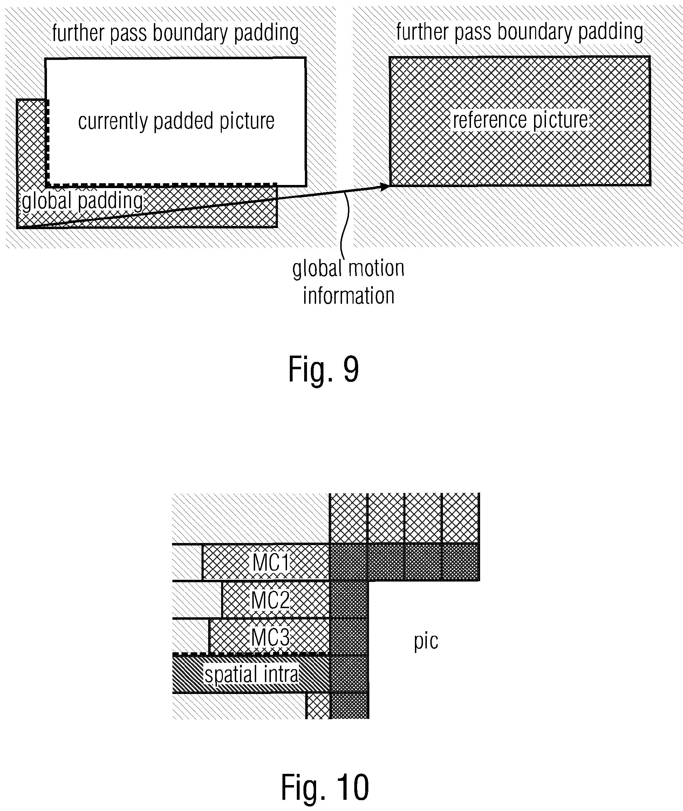

The protected invention is defined by the enclosed claims. Enabling disclosure for the protected invention is provided below in the section entitled "Aspect 2: inter-predicted GLOBAL padding" making reference to figure 9. Other described aspects and embodiments are provided for illustrative purposes and do not form part of the protected invention unless when combined with the technical features defined in the enclosed independent claims.

It should be noted that any embodiments as defined by the claims can be supplemented by any of the details (features and functionalities) described in the above mentioned chapters.

Also, outside of the scope of the appended independent claims and thereby outside of the scope of the protected invention, the embodiments described in the above mentioned chapters can be used individually, and can also be supplemented by any of the features in another chapter, or by any feature included in the claims.

Also, it should be noted that individual aspects described herein can be used individually or in combination. Thus, details can be added to each of said individual aspects without adding details to another one of said aspects.

It should be noted that the present disclosure describes, explicitly or implicitly, features usable in a video decoder (apparatus for providing a decoded representation of a video from a data stream on the basis of an encoded representation) as well as in a video encoder (apparatus for providing a encoded representation of a video from a data stream). Thus, any of the features described herein can be used in the context of a video decoder.

Moreover, features and functionalities disclosed herein relating to a method can also be used in an apparatus (configured to perform such functionality). Furthermore, any features and functionalities disclosed herein with respect to an apparatus can also be used in a corresponding method. In other words, the methods disclosed herein can be supplemented by any of the features and functionalities described with respect to the apparatus.

Also, any of the features and functionalities described herein can be implemented in hardware or in software, or using a combination of hardware and software, as will be described herein.

### Background

Since H.261, all video coding standards, including the state of the art ITU T H.265 | MPEG H HEVC video coding standard [1], rely on the basic concept of block-based hybrid video coding. Here the input signal for each color component is segmented into disjoint blocks, which are encoded using a hybrid video coding scheme, based on prediction, transform, quantization and entropy coding. Thus, one of the first steps in the encoding and decoding algorithm is the generation of the prediction signal for the current block, which is performed by either a spatial or a temporal prediction scheme. In case of temporal prediction, the prediction signal is derived from already processed frames, which are denoted as reference frames. For this purpose, a displacement vector specifies the offset of the prediction signal in the reference frame relative to the position of the current coded block. This temporal prediction scheme is also known as translational motion compensated prediction. In this meaning, the displacement vector is denoted as motion vector.

In order to allow motion vectors with a sub-pixel precision, the prediction signal is calculated using interpolation filters. Furthermore, the prediction signal can be composed by a superposition of multiple prediction signals, each specified by a different motion vector and/or a different reference frame. Independent of final calculation and composition of the prediction signal, the basic principle remains the same. The area of the referenced block within the reference frame is determined by position and size of the current coded block, displaced by an additional motion vector. In case interpolation filters are used, this area has to be expanded to each side in dependence to the number of used filter taps. The pixels within the area of the referenced block are then used to generate the temporal prediction signal for the current coded block. Usually, the area of the referenced block lays within the reconstructed reference frame. Nevertheless, the area of the referenced block may not completely overlap with the area of the reconstructed frame, which means part of the referenced pixel area may lay outside of the reference frame area.

### State of the art

Relevant state of the art documents are identified in the list of references at the end of the description. A summary of several relevant boundary padding techniques can also be found section 6 of YANG H ET AL: "Description of Core Experiment 4 (CE4): Inter prediction and motion vector coding" (XP030151319), published online as JVET-J1024-V3 on 28 May 2018 in the document repository of THE JOINT VIDEO EXPLORATION TEAM OF ISO/IEC JTC1/ SC29/WG11 AND ITU-T SG.16.

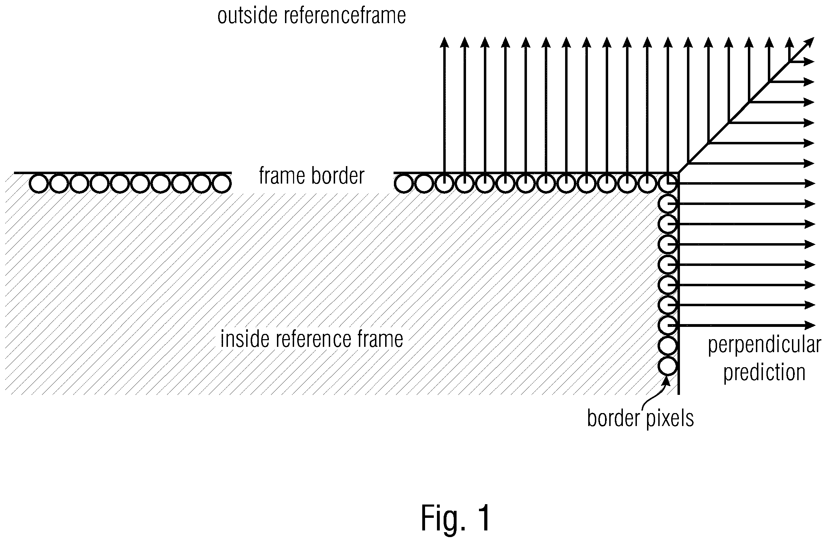

In current video coding standards, the basic approach to handle a referenced pixel area outside the reference frame area is either to restrict the motion vectors or to extend the reference frame area. For example, in H.261 the motion vectors are restricted at the picture boundary, such that all pixels referenced are within the reference frame area. Alternatively, in H.265 a process referred to as **perpendicular boundary padding** (BP) is used to extend the already reconstructed reference frame in a static manner, i.e. in a **once-per-picture** manner. Here, the boundary pixels are copied into the padded area, which can be viewed as a spatial prediction of the border pixels perpendicular to the frame border as shown in Fig. 1. Here, at the edges of the reference frame, the edge pixels are additionally copied into the remaining area outside the reference frame area, which lays next to the edge pixel as shown in Fig.1.

Further state-of the art approaches referred to as **omnidirectional content BP** are advantageous when dealing with specific video content known as omnidirectional or 360° video which employs an omnidirectional projection to map the camera surroundings onto a rectangular video picture plane. One of the widely used formats for such content is based on the equirectangular projection (ERP). Omnidirectional content allows to fill regions outside the picture boundaries with correct content as the correct content is by definition depicted elsewhere in the same picture. Any vertical picture boundary of ERP video content that depicts 360° horizontally can be padded by copying samples from the opposite vertical picture boundary. However, the horizontal picture boundary, especially in case the vertical viewing angle offers less than full coverage, exhibits different characteristics. This approach also falls into the category of static boundary extension that are carried out in a **once-per-picture** manner.

Further state-of-the-art BP methods facilitate techniques that are known as prediction tools, e.g. directional spatial intra-prediction or motion compensated inter-prediction.

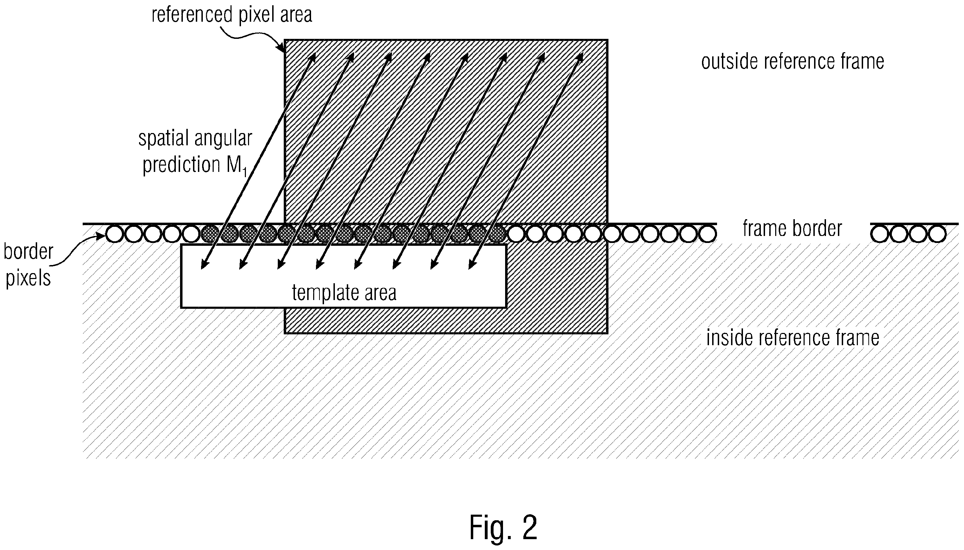

In **intra-prediction-based BP** the area of a motion compensated prediction block that resides outside the picture boundary is filled individually per motion compensated reference using a spatial intra-prediction from sample values at the picture boundary as illustrated in Fig. 2. It is worth noting that this approach of BP does not fall into the same category as the above approaches but is instead carried out individually in a once-per-reference manner for each reference block that entails BP samples. I.e. the same BP sample could have a different value depending on the reference block it is located in. The applied spatial intra prediction mode may be derived on decoder side by probing one or multiple template area within the coded picture or by explicit signaling. Such and similar state-of-the-art methods are described in detail in EP18165221.5 (HHI-2018 P61140 EP).

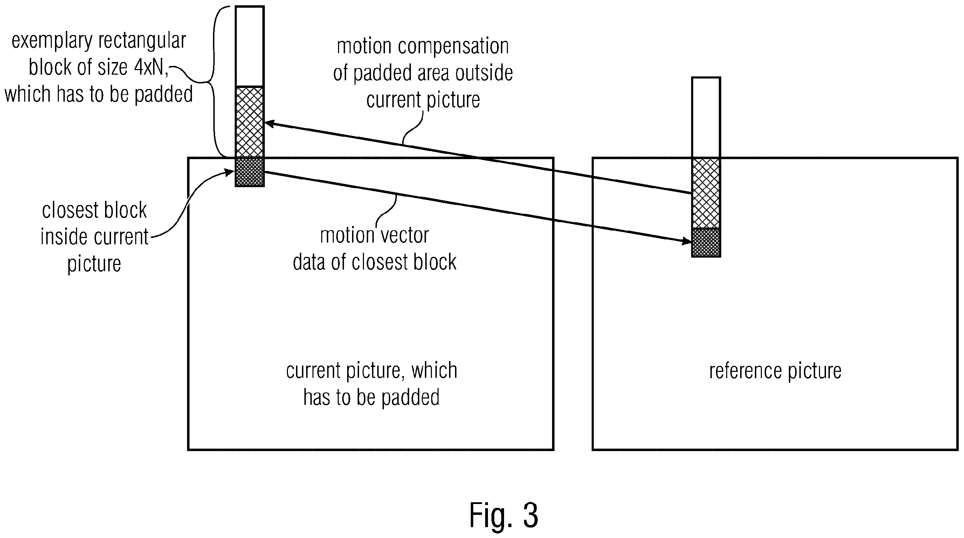

In **inter-prediction-based BP,** which belongs into the static category of **once-per-picture** approaches, the area outside the picture boundaries is filled once by facilitating motion compensated prediction information from neighboring blocks on the picture boundaries. One method is to divide the area outside the picture boundary until a certain distance threshold N into rectangular blocks, e.g. Nx4 pixels for left and right border or 4xN pixels for top and bottom border. For each of those outside-blocks, the closest block within the picture area is checked for motion compensation data and if present, this motion compensated data is used to fill the outside-block through motion compensated prediction, as shown in Fig. 3.

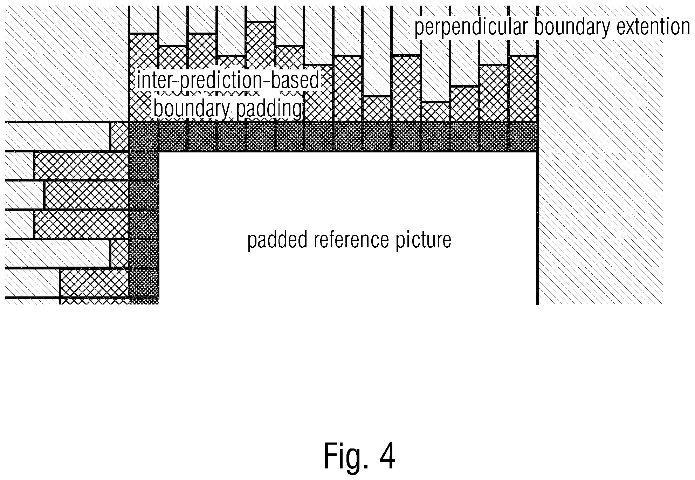

One such exemplary technique [2] in addition to the above adds an offset to the sample values, which may for instance be computed from the average residual of the closest block within the picture area lending the motion compensated data. Another such exemplary technique [3] uses bi-prediction combining two motion compensated prediction signals to fill the area outside the picture. For areas outside the picture boundary for which no such procedure can be carried out, e.g. through missing motion information, perpendicular BP is carried out as illustrated in Fig. 4.

However, the use of inter-prediction-based BP introduces a number of drawbacks, e.g.,
- Absence of motion information: when no motion information can be derived from neighboring blocks, e.g., intra pictures or only intra blocks nearby, inter-prediction-based BP cannot be carried out
- Unusable motion information: when motion information points outside the reference picture boundary, the resulting samples might be unavailable or of poor quality
- Poor quality of padding samples:
   ∘ No residual is transmitted for the motion compensated reference samples, leading to poor quality of the BP samples if picture content has significantly changed
   ∘ The block-based operation in absence of residual information or filtering leads to severe block artifacts in the form of discontinuities in the BP when motion information along the picture boundary is unsteady.
   ∘ Perpendicular BP as fallback introduces strong block boundary artifacts along the perpendicular boundary to neighboring inter-prediction-based padded areas

This invention targets to mitigate the above drawbacks.

### DETAILED DESCRIPTION

Preferred embodiments of the present application are described below with respect to the figures, among which:
Fig. 1 shows an exemplary diagram of the prior art of the boundary padding of reference frame;
Fig. 2 shows an exemplary illustration of intra-prediction-based boundary padding;
Fig. 3 shows an exemplary diagram to explain a technique of intra-prediction-based boundary padding;
Fig. 4 shows an exemplary illustration of perpendicular boundary extension fallback for areas without available motion information;
Fig. 5 shows a block diagram of an apparatus for predictively coding a video as an example for a video decoder where a motion compensated prediction for inter-predicted blocks according to embodiments of the present application could be implemented;
Fig. 6 shows a block diagram of an apparatus for predictively decoding a video, which fits to the apparatus of Fig. 5, as an example for a video decoder where a motion compensated prediction for inter-predicted blocks according to embodiments of the present application could be implemented;
Fig. 7 shows a schematic diagram illustrating an example for a relationship between a prediction residual signal, a prediction signal and a reconstructed signal so as to illustrate possibilities of setting subdivisions of defining the prediction signal, handling the prediction residual signal and the like, respectively;
Fig. 8 shows an exemplary schematic illustration of reference block entailing samples of the picture boundary extension;
Fig. 9 shows an exemplary schematic illustration of global padding using single motion information;
Fig. 10 shows an exemplary schematic illustration of a mixture of boundary padding types with overlapping block motion compensation;
Fig. 11 shows an exemplary schematic illustration of maximum displacement D and width W for an exemplary referenced block and intra prediction mode.

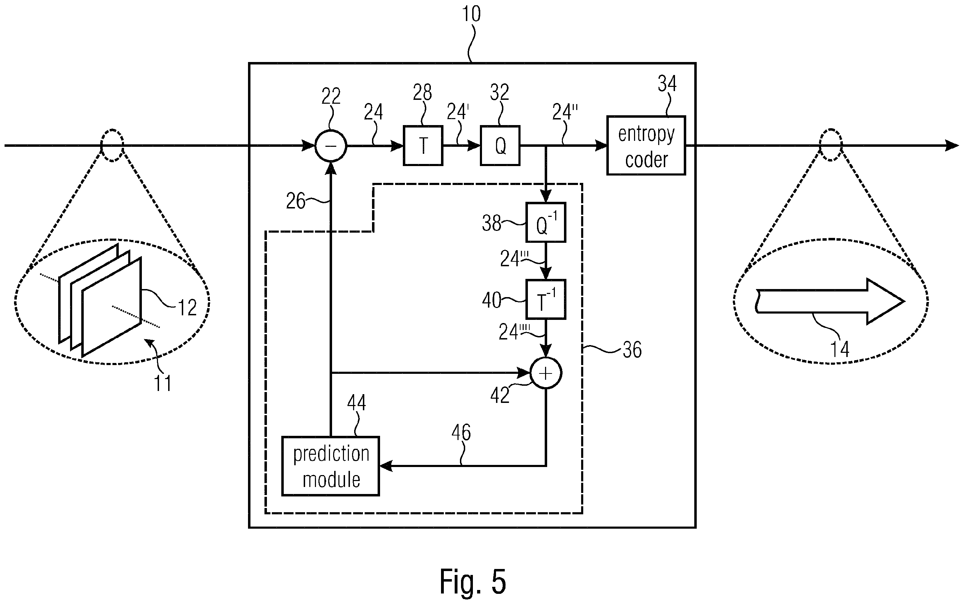

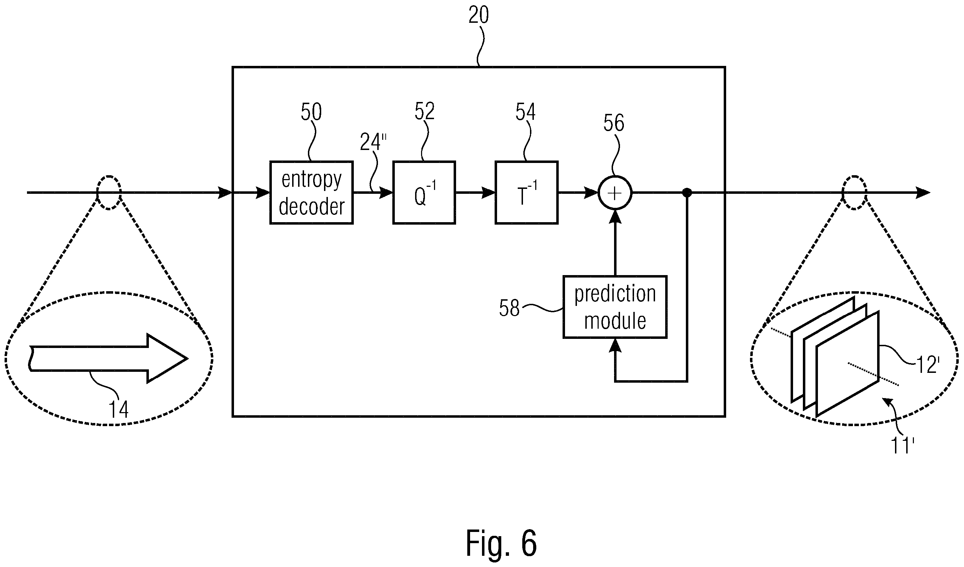

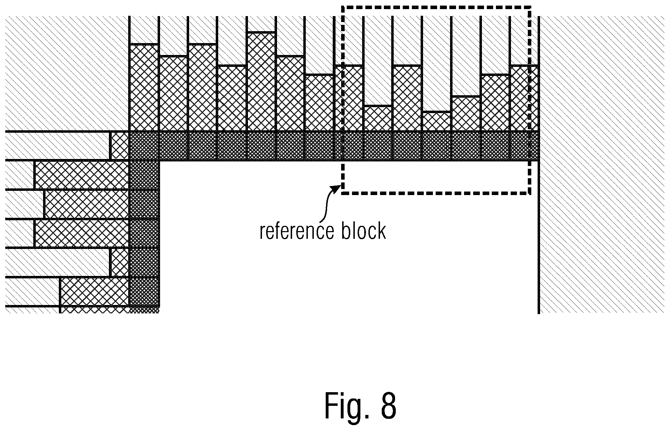

The following description of the figures starts with a presentation of a description of video encoder and video decoder of a block-based predictive codec for coding pictures of a video in order to form an example for a coding framework into which embodiments for a composed prediction codec may be built in. The video encoder and video decoder are described with respect to Figs 5 to 7. Thereinafter the description of embodiments of the concept of the prediction mode of the present application are presented along with a description as to how such concepts could be built into the video encoder and decoder of Figs. 5 and 6, respectively, although the embodiments described with the subsequent Figs. 8 and following, may also be used to form video encoder and video decoders not operating according to the coding framework underlying the video encoder and video decoder of Figs. 5 and 6.

Fig. 5 shows an apparatus for predictively coding a video 11 composed of a sequence of pictures 12 into a data stream 14. Block-wise predictive coding is used to this end. Further, transform-based residual coding is exemplarily used. The apparatus, or encoder, is indicated using reference sign 10. Fig. 6 shows a corresponding decoder 20, i.e. an apparatus 20 configured to predictively decode the video 11' composed of pictures 12' in picture blocks from the data stream 14, also here exemplarily using transform-based residual decoding, wherein the apostrophe has been used to indicate that the pictures 12' and video 11', respectively, as reconstructed by decoder 20 deviate from pictures 12 originally encoded by apparatus 10 in terms of coding loss introduced by a quantization of the prediction residual signal. Fig. 5 and Fig. 6 exemplarily use transform based prediction residual coding, although embodiments of the present application are not restricted to this kind of prediction residual coding. This is true for other details described with respect to Fig. 5 and 6, too, as will be outlined hereinafter.

The encoder 10 is configured to subject the prediction residual signal to spatial-to-spectral transformation and to encode the prediction residual signal, thus obtained, into the data stream 14. Likewise, the decoder 20 is configured to decode the prediction residual signal from the data stream 14 and subject the prediction residual signal thus obtained to spectral-to-spatial transformation.

Internally, the encoder 10 may comprise a prediction residual signal former 22 which generates a prediction residual 24 so as to measure a deviation of a prediction signal 26 from the original signal, i.e. video 11 or a current picture 12. The prediction residual signal former 22 may, for instance, be a subtractor which subtracts the prediction signal from the original signal, i.e. current picture 12. The encoder 10 then further comprises a transformer 28 which subjects the prediction residual signal 24 to a spatial-to-spectral transformation to obtain a spectral-domain prediction residual signal 24' which is then subject to quantization by a quantizer 32, also comprised by encoder 10. The thus quantized prediction residual signal 24" is coded into data stream 14. To this end, encoder 10 may optionally comprise an entropy coder 34 which entropy codes the prediction residual signal as transformed and quantized into data stream 14. The prediction residual 26 is generated by a prediction stage 36 of encoder 10 on the basis of the prediction residual signal 24" decoded into and decodable from, data stream 14. To this end, the prediction stage 36 may internally, as is shown in Fig. 6, comprise a dequantizer 38 which dequantizes prediction residual signal 24" so as to gain spectral-domain prediction residual signal 24‴, which corresponds to signal 24' except for quantization loss, followed by an inverse transformer 40 which subjects the latter prediction residual signal 24‴ to an inverse transformation, i.e. a spectral-to-spatial transformation, to obtain prediction residual signal 24ʺʺ, which corresponds to the original prediction residual signal 24 except for quantization loss. A combiner 42 of the prediction stage 36 then recombines, such as by addition, the prediction signal 26 and the prediction residual signal 24ʺʺ so as to obtain a reconstructed signal 46, i.e. a reconstruction of the original signal 12. Reconstructed signal 46 may correspond to signal 12'.

A prediction module 44 of prediction stage 36 then generates the prediction signal 26 on the basis of signal 46 by using, for instance, spatial prediction, i.e. intra prediction, and/or temporal prediction, i.e. inter prediction. Details in this regard are described in the following.

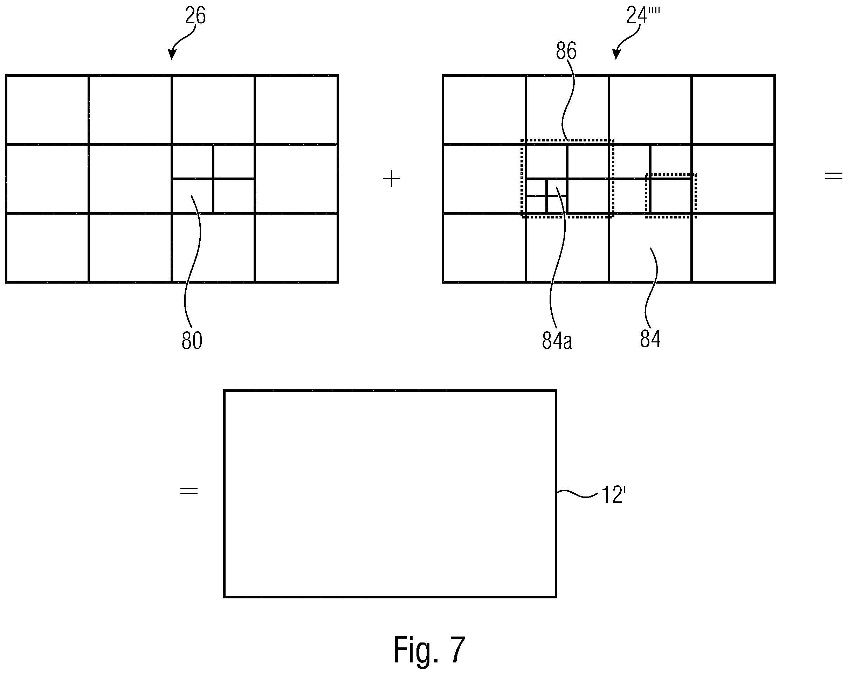

Likewise, decoder 20 may be internally composed of components corresponding to, and interconnected in a manner corresponding to, prediction stage 36. In particular, entropy decoder 50 of decoder 20 may entropy decode the quantized spectral-domain prediction residual signal 24" from the data stream, whereupon dequantizer 52, inverse transformer 54, combiner 56 and prediction module 58, interconnected and cooperating in the manner described above with respect to the modules of prediction stage 36, recover the reconstructed signal on the basis of prediction residual signal 24" so that, as shown in Fig. 7, the output of combiner 56 results in the reconstructed signal, namely the video 11'or a current picture 12' thereof.

Although not specifically described above, it is readily clear that the encoder 10 may set some coding parameters including, for instance, prediction modes, motion parameters and the like, according to some optimization scheme such as, for instance, in a manner optimizing some rate and distortion related criterion, i.e. coding cost, and/or using some rate control. As described in more details below, encoder 10 and decoder 20 and the corresponding modules 44, 58, respectively, support different prediction modes such as intra-coding modes and inter-coding modes which form a kind of set or pool of primitive prediction modes based on which the predictions of picture blocks are composed in a manner described in more detail below. The granularity at which encoder and decoder switch between these prediction compositions may correspond to a subdivision of the pictures 12 and 12', respectively, into blocks. Note that some of these blocks may be blocks being solely intra-coded and some blocks may be blocks solely being inter-coded and, optionally, even further blocks may be blocks obtained using both intra-coding and inter-coding, but details are set-out hereinafter. According to intra-coding mode, a prediction signal for a block is obtained on the basis of a spatial, already coded/decoded neighborhood of the respective block. Several intra-coding sub-modes may exist the selection among which, quasi, represents a kind of intra prediction parameter. There may be directional or angular intra-coding sub-modes according to which the prediction signal for the respective block is filled by extrapolating the sample values of the neighborhood along a certain direction which is specific for the respective directional intra-coding sub-mode, into the respective block. The intra-coding sub-modes may, for instance, also comprise one or more further sub-modes such as a DC coding mode, according to which the prediction signal for the respective block assigns a DC value to all samples within the respective block, and/or a planar intra-coding mode according to which the prediction signal of the respective block is approximated or determined to be a spatial distribution of sample values described by a two-dimensional linear function over the sample positions of the respective block with deriving tilt and offset of the plane defined by the two-dimensional linear function on the basis of the neighboring samples. Compared thereto, according to inter-prediction mode, a prediction signal for a block may be obtained, for instance, by temporally predicting the block inner. For parametrization of an inter-prediction mode, motion vectors may be signaled within the data stream, the motion vectors indicating the spatial displacement of the portion of a previously coded picture of the video 11 at which the previously coded/decoded picture is sampled in order to obtain the prediction signal for the respective block. This means, in addition to the residual signal coding comprised by data stream 14, such as the entropy-coded transform coefficient levels representing the quantized spectral-domain prediction residual signal 24", data stream 14 may have encoded thereinto prediction related parameters for assigning to the blocks prediction modes, prediction parameters for the assigned prediction modes, such as motion parameters for inter-prediction modes, and, optionally, further parameters which control a composition of the final prediction signal for the blocks using the assigned prediction modes and prediction parameters as will be outlined in more detail below. Additionally, the data stream may comprise parameters controlling and signaling the subdivision of picture 12 and 12', respectively, into the blocks. The decoder 20 uses these parameters to subdivide the picture in the same manner as the encoder did, to assign the same prediction modes and parameters to the blocks, and to perform the same prediction to result in the same prediction signal.

Fig. 7 illustrates the relationship between the reconstructed signal, i.e. the reconstructed picture 12', on the one hand, and the combination of the prediction residual signal 24ʺʺ as signaled in the data stream, and the prediction signal 26, on the other hand. As already denoted above, the combination may be an addition. The prediction signal 26 is illustrated in Fig. 8 as a subdivision of the picture area into blocks 80 of varying size, although this is merely an example. The subdivision may be any subdivision, such as a regular subdivision of the picture area into rows and columns of blocks, or a multi-tree subdivision of picture 12 into leaf blocks of varying size, such as a quadtree subdivision or the like, wherein a mixture thereof is illustrated in Fig. 8 where the picture area is firstly subdivided into rows and columns of tree-root blocks which are then further subdivided in accordance with a recursive multi-tree subdivisioning to result into blocks 80.

The prediction residual signal 24ʺʺ in Fig. 8 is also illustrated as a subdivision of the picture area into blocks 84. These blocks might be called transform blocks in order to distinguish same from the coding blocks 80. In effect, Fig. 7 illustrates that encoder 10 and decoder 20 may use two different subdivisions of picture 12 and picture 12', respectively, into blocks, namely one subdivisioning into coding blocks 80 and another subdivision into blocks 84. Both subdivisions might be the same, i.e. each block 80, may concurrently form a transform block 84 and vice versa, but Fig. 8 illustrates the case where, for instance, a subdivision into transform blocks 84 forms an extension of the subdivision into blocks 80 so that any border between two blocks 80 overlays a border between two blocks 84, or alternatively speaking each block 80 either coincides with one of the transform blocks 84 or coincides with a cluster of transform blocks 84. However, the subdivisions may also be determined or selected independent from each other so that transform blocks 84 could alternatively cross block borders between blocks 80. As far as the subdivision into transform blocks 84 is concerned, similar statements are thus true as those brought forward with respect to the subdivision into blocks 80, i.e. the blocks 84 may be the result of a regular subdivision of picture area into blocks, arranged in rows and columns, the result of a recursive multi-tree subdivisioning of the picture area, or a combination thereof or any other sort of segmentation. Just as an aside, it is noted that blocks 80 and 84 are not restricted to being quadratic, rectangular or any other shape. Further, the subdivision of a current picture 12 into blocks 80 at which the prediction signal is formed, and the subdivision of a current picture 12 into blocks 84 at which the prediction residual is coded, may not the only subdivision used for coding/decoding. These subdivision from a granularity at which prediction signal determination and residual coding is performed, but firstly, the residual coding may alternatively be done without subdivisioning, and secondly, at other granularities than these subdivisions, encoder and decoder may set certain coding parameters which might include some of the aforementioned parameters such as prediction parameters, prediction signal composition control signals and the like.

Fig. 7 illustrates that the combination of the prediction signal 26 and the prediction residual signal 24ʺʺ directly results in the reconstructed signal 12'. However, it should be noted that more than one prediction signal 26 may be combined with the prediction residual signal 24ʺʺ to result into picture 12' in accordance with alternative embodiments such as prediction signals obtained from other views or from other coding layers which are coded/decoded in a separate prediction loop with separate DPB, for instance.

In Fig. 7, the transform blocks 84 shall have the following significance. Transformer 28 and inverse transformer 54 perform their transformations in units of these transform blocks 84. For instance, many codecs use some sort of DST or DCT for all transform blocks 84. Some codecs allow for skipping the transformation so that, for some of the transform blocks 84, the prediction residual signal is coded in in the spatial domain directly. However, in accordance with embodiments described below, encoder 10 and decoder 20 are configured in such a manner that they support several transforms. For example, the transforms supported by encoder 10 and decoder 20 could comprise:
o DCT-II (or DCT-III), where DCT stands for Discrete Cosine Transform
o DST-IV, where DST stands for Discrete Sine Transform
o DCT-IV
o DST-VII
o Identity Transformation (IT)

Naturally, while transformer 28 would support all of the forward transform versions of these transforms, the decoder 20 or inverse transformer 54 would support the corresponding backward or inverse versions thereof:
o Inverse DCT-II (or inverse DCT-III)
o Inverse DST-IV
o Inverse DCT-IV
o Inverse DST-VII
o Identity Transformation (IT)

In any case, it should be noted that the set of supported transforms may comprise merely one transform such as one spectral-to-spatial or spatial-to-spectral transform.

As already outlined above, Figs. 5 to 7 have been presented as an example where the composed-prediction concept described further below may be implemented in order to form specific examples for video encoders and decoders according to the present application. Insofar, the video encoder and decoder of Figs. 5 and 6, respectively, represent possible implementations of the video encoders and decoders described herein below. As will be outlined in more detail below, when having the subsequently explained embodiments for composed prediction according to the present application built into the video encoder and decoder of Fig. 5 and 6, the video encoder of Fig. 5 and the video decoder of Fig. 6 support, at least as one option, to process a block 80 in the manner outlined in more detail below, or even all blocks a current picture 12 is composed of. Thus, the embodiments described hereinafter, inter alias, refer to a video encoder which equals the encoder 10 of Fig. 5 which treats blocks 80 in the manner outlined in more detail below and the same applies with respect to the decoder of Fig. 6 which, thus, represents an example for a video decoder according to an embodiment where blocks 80 are treated in the manner outlined in more detail below. Fig 5 and 6 are, however, only specific examples. A video encoder according to embodiments of the present application may, however, perform block-based encoding using the concept outlined in more detail below and being different from the encoder of Fig. 5 such as, for instance, in that the subdivision into blocks 80 is performed in a manner different than exemplified in Fig. 7, or in that this encoder does not use transform prediction residual coding with coding the prediction residual, for instance, in spatial domain directly instead. Likewise, video decoders according to embodiments of the present application may perform decoding from data stream 14 using the composed-prediction coding concept further outlined below, but may differ, for instance, from the decoder 20 of Fig. 6 in that sub-divides picture 12' into blocks in a manner different than described with respect to Fig. 7 and/or in that same does not derive the prediction residual from the data stream 14 in transform domain, but in spatial domain, for instance.

In particular, with respect to the block-subdivisioning into blocks 80, it is noted that same may be done in the manner outlined with respect to Fig. 7 or in a different manner. A subdivisioning into transform blocks, if present, may also be done as described with respect to Fig. 7 or in a different manner. In particular, the subdivisioning into blocks on the one hand and into other blocks on the other hand, such as transform blocks, may be done independent from each other by separately subdividing picture 12 into these blocks, respectively, or in a dependent manner. For instance, one subdivision such as the subdivision into transform blocks may form an extension of the other subdivision as described above, or both subdivisions may form separate extensions of a common primary subdivision such as, for instance, the subdivision of the picture into an array of tree root blocks as described with respect to Fig. 7. And such possibilities also apply for other sub-picture granularities which will be mentioned below such as with respect to the definition of certain prediction parameters, prediction modes, contribution weights or the like. Different subdivisions may be used for different ones of these entities and same may be defined independent from each other, partially independent or as extensions from one another.

### Aspect 1: Intra fallback for inter-prediction-based padding

A first aspect of the invention targets to augment a once-per-picture padding approach with an additional once-per-reference padding approach. The invention is to check the once-per-picture BP samples entailed in a reference block and conditionally fall back to a once-per-reference padding approach.

The invention entails additional processing on encoder and decoder side beyond the state-of-the-art methods described above, particularly in case the motion compensated prediction uses samples outside the boundary of a reference picture. Before serving as reference for motion compensated prediction of another picture, the additional samples outside the reference picture boundary are created on a once-per-picture manner. In one embodiment, an inter-prediction-based BP approach would be used to extend the reference picture, e.g. such as described above, in which motion compensated samples are copied and perpendicular BP serves as a fallback option for areas suffering an absence of associated motion information. The following Fig. 8 gives an example of such a reference block (dashed line black rectangle) and the BP samples it entails (dashed blue: motion compensated BP and orange areas: fallback perpendicular BP), exemplarily using inter-prediction-based BP.

For each reference block that partly or fully entails samples of the initial once-per-picture BP, a condition determines whether an additional once-per-reference BP is to be carried out which replaces the sample values in the prediction from the reference block that stem from the initial once-per-picture BP. In another embodiment of the invention, the once-per-reference BP is an intra-prediction-based BP scheme as described above, e.g. filling the BP area with spatial intra prediction using the boundary sample values and determining the spatial direction using a probing or template area within the picture boundaries or explicit signaling.

The above condition may depend on the sample values within the reference block. In one embodiment, the condition is a threshold for a sample value based metric that measures the visual impact fidelity of the once-per-picture BP samples using only the BP sample values. In another embodiment, the condition is a threshold on the difference of sample value based metric measures of the BP samples within the reference block and actual coded picture samples within the reference block.

The condition may also incorporate additional samples values outside the reference block. In another embodiment the threshold condition for the sample value based metric measure also incorporates samples of the reference block neighborhood in the BP area. In another embodiment the threshold condition for a sample value based metric measure also incorporates samples of the reference block neighborhood in the picture area. In another embodiment, the threshold condition uses sample value based metric measures calculated separately with samples inside the reference block and outside the reference block. In another embodiment the sample-based metric measure is a non-reference blockiness metric measure that quantifies the visual impact of block artifacts such as described in [4].

The condition may also incorporate further information about the BP samples in the reference block such as the method of sample value generation (e.g. motion-compensated prediction, perpendicular BP). In one embodiment, the condition is an upper or lower bound threshold on the number of BP samples that stem from a certain type of sample value generation. In one embodiment, the above type is motion-compensated inter-prediction. In one embodiment, the above type is perpendicular intra-prediction-based BP.

In another embodiment, the condition is a threshold on the ratio of number of BP samples in the reference block stemming from two separate types of sample value generation. In one embodiment the condition is a threshold on the ratio of number of BP samples stemming from motion compensated BP to the number of BP samples stemming from perpendicular BP. In another embodiment the condition is a threshold on the number of separate, non-connected regions formed by BP samples of the reference block, stemming from a type of sample value generation. In one embodiment, the above type is perpendicular BP.

The condition may also depend on characteristics of the motion compensation. In one embodiment, the condition is any combination of the above thresholds and in addition depends on the reference block size. In one embodiment, the condition is any combination of the above thresholds and in addition depends on the distance between reference block and picture boundary. In one embodiment, the condition is any combination of the above thresholds and in addition depends on the amount of BP samples that the reference block entails.

In other words, the invention entails the following procedure:
1. Carry out inter-predication-based boundary padding for the whole picture
2. For each motion compensated reference into the boundary padding area, conditionally fall back to intra-prediction-based boundary padding

### Condition embodiments:

- threshold for a sample value based metric measure
   ∘ only using BP samples
   ∘ separately considering coded samples and BP samples in reference block
   ∘ incorporating reference block neighbourhood samples
   ∘ metric being a non-reference blockiness metric
- threshold for the ratio of boundary padding samples stemming from two different techniques, e.g. motion compensated BP to perpendicular BP
- threshold for the number of certain samples, e.g. perpendicular padded samples
- threshold for the number of disjoint regions in boundary padding area stemming from a certain technique
- thresholds as above depending
   ∘ on reference block size
   ∘ on distance to picture boundary
   ∘ on amount of BP samples in reference block

### Aspect 2: inter-predicted GLOBAL Padding

A second aspect of the invention is to use the overall camera motion between two frames and use reference frame content for motion compensated prediction to fill the BP area in a manner using the same global motion information for a comparatively large number of connected BP samples and hence no visual block artifacts occur as illustrated in Fig.9. This approach serves as a first pass BP, before additional passes such as inter- and intra-prediction-based approaches described above, are carried out to fill the BP areas not covered in the first pass. By using the same motion information for a comparatively large number of connected BP samples, the blocking artefacts of the above described inter-prediction based BP are avoided. As part of the invention, a filtering procedure is used to mitigate potential artifacts between the picture boundary and the global padding area.

In an embodiment of the invention, the global padding motion information is derived as average of the motion information of the coded picture blocks. In another embodiment, the global padding motion information is derived as average of the outliner-cleaned motion information of the coded picture blocks. In another embodiment, the coded picture blocks used for derivation of the global padding motion information are a subset of all coded picture blocks such as picture boundary blocks or an explicitly signaled dynamic region. In another embodiment of the invention, the global padding information is explicitly signaled. In another embodiment of the invention, the reference picture used for global padding is explicitly signaled. In another embodiment of the invention, the first reference picture of the first reference picture list is used for global padding.

In another embodiment of the invention, all or multiple reference pictures from the reference picture list(s) are used for global padding. Hereby in one particular embodiment the global padding area is cumulatively increased by using the available picture samples from the nearest reference picture first and adding further away reference pictures incrementally. In this context "nearer" means that the picture order count (POC) difference of the current picture to the nearer reference picture is smaller than to the further away reference picture. In case the global padded areas of two different reference pictures overlap, in one particular embodiment the area of the nearer reference picture is used exclusively and in a different embodiment the overlapping areas are combined by a weighting filter using the picture order count differences from the current picture to the reference pictures as weighting factors for the overlapping global padding area. In another embodiment, two reference pictures from the reference picture lists are selected to cumulatively create a global padding. The criterion for selection is the maximum distance between the two respective motion information. In another embodiment, a reference picture from each reference picture list (list0: POC is smaller than current pic, list1: POC is larger than current pic) is selected.

In another embodiment of the invention, a convolutional smoothing filter is used on areas entailing samples of the picture boundary and the global padding marked in red dashes in Fig. 9.

### Aspect 3: Improved Sample Quality inter-Prediction BP

A third aspect of the invention entails further steps to mitigate the blocking artefacts of state-of-the-art inter-prediction-based BP as described above. As a first measure against block artefacts between motion-compensated samples belonging to two blocks in the BP with different motion information, the motion compensation is carried out in a fashion known as overlapping block motion compensation (OBMC). In OBMC, edge samples of a block are weighted and mixed with weighted samples stemming from motion compensation based on the motion information of the respective neighbor blocks. Through creating such mixed samples at the block edge, blocking artefacts are less pronounced.

In one embodiment, OBMC of BP samples is only carried out on two opposite edges of the four MxN BP block edges that are shared with BP blocks associated with different motion information. I.e. this excludes the edges neighboring the picture boundary and opposed to the picture boundary). For instance, in Fig. 10, a close up of a region containing BP and picture boundary samples is shows where it can be seen that some blocks were generated using motion compensation (MC1-MC3). In this embodiment, the block labeled MC2 would entail two filtered edges, the edge shared with MC1 and MC3.

In another embodiment, the OBMC procedure is carried out on a current BP block boundary shared with a neighbor block not having motion information such as illustrated as a red dashed edge between MC3 and the block labeled "Spatial Intra" in Fig. 10. In this case, the weighted sample values that are not obtained through motion information of the current block MC3 (but instead usually using motion information of the neighbor block) are instead obtained by using the prediction mode of the neighbor block "Spatial Intra" as illustrated through dashes.

There are also cases where OBMC might not be possible due to computational constraints or otherwise unavailable resources. In such cases, the invention is to apply an additional filter on the boundaries between BP blocks after carrying out motion compensation or intra prediction. In one embodiment of the invention, a convolutional smoothing filter is used on areas entailing samples of two neighboring BP blocks.

In other words, the invention entails
o Option 1: OMBC inter-prediction
   ▪ Special case where only opposite block edges are filtered as opposed to regular OBMC (either top & left or all four edges)
   ▪ Special case when an inter-prediction-based padded area is next to another form of BP: such samples need to be weighted too
o Option 2: Deblocking filtering

### Aspect 4: Constrained Intra-Prediction-based BP

When intra-prediction-based BP is used and the reference block is comparatively far from the picture boundary, a problem arises as for certain spatial prediction modes, the template area within the picture boundary used to compare the mode is comparatively far from the reference block. This translates into a degraded correlation between template area and reference block which might result in a poor decision and poor-quality BP. Therefore, the invention is to constrain the available modes such that an upper limit for the spatial distance between template area and reference block is established.

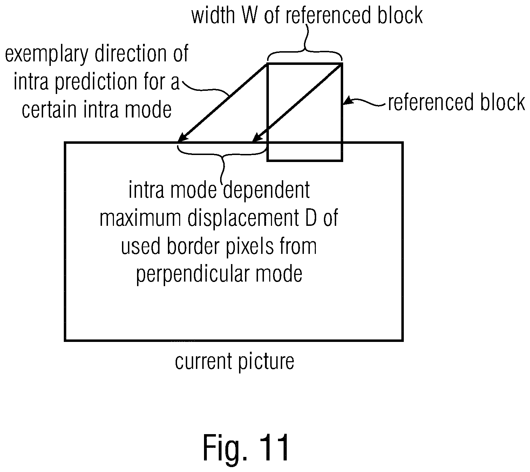

In a particular embodiment of this invention, for each mode the maximum displacement of the used border pixels from a perpendicular intra prediction is calculated, as shown in Fig. 11. A mode under test is not used for intra-prediction-based boundary prediction, whenever the displacement D is above a certain threshold T. In a particular embodiment of this invention the threshold *7* is set to *T* = *c* · *Width.* Where c is a constant set to 1.25 and *Width* is the width of the padded block parallel to the reference border.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

The inventive data stream can be stored on a digital storage medium or can be transmitted on a transmission medium such as a wireless transmission medium or a wired transmission medium such as the internet.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

[1] ITU-T and ISO/IEC. High efficiency video coding. ITU-T Recommendation H.265 | ISO/IEC 23008 10 (HEVC), edition 1, 2013; edition 2, 2014.
[2] Description of SDR, HDR and 360° video coding technology proposal by Qualcomm and Technicolor - low and high complexity versions, Y.-W. Chen, W.-J. Chien, H.-C. Chuang, M. Coban, J. Dong, H. E. Egilmez, N. Hu, M. Karczewicz, A. Ramasubramonian, D. Rusanovskyy, A. Said, V. Seregin, G. Van Der Auwera, K. Zhang, L. Zhang (Qualcomm), P. Bordes, Y. Chen, C. Chevance, E. François, F. Galpin, M. Kerdranvat, F. Hiron, P. de Lagrange, F. Le Léannec, K. Naser, T. Poirier, F. Racapé, G. Rath, A. Robert, F. Urban, T. Viellard (Technicolor), JVET-J0021
[3] Description of SDR, HDR and 360° video coding technology proposal by Huawei, GoPro, HiSilicon, and Samsung - general application scenario,H. Chen, J. Chen, R. Chernyak, S. Esenlik, A. Filippov, S. Gao, S. Ikonin, A. Karabutov, A. M. Kotra, X. Lu, X. Ma, V. Rufitskiy, T. Solovyev, V. Stepin, M. Sychev, T. Wang, Y.-K. Wang, W. Xu, H. Yang, V. Zakharchenko, H. Zhang, Y. Zhao, Z. Zhao, J. Zhou, C. Auyeung, H. Gao, I. Krasnov, R. Mullakhmetov, B. Wang, Y. F. Wong, G. Zhulikov (Huawei), A. Abbas, D. Newman (GoPro), J. An, X. Chen, Y. Lin, Q. Yu, J. Zheng (HiSilicon), A. Alshin, E. Alshina, K. Choi, N. Choi, W. Choi, S. Jeong, C. Kim, J. Min, J. Park, M. Park, M. W. Park, Y. Piao, A. Tamse, A. Dsouza, C. Pujara (Samsung), JVET-J0025
[4] Shahid, Muhammad, et al. "No-reference image and video quality assessment: a classification and review of recent approaches." EURASIP Journal on Image and Video Processing 2014.1 (2014): 40.

## Claims

1. Apparatus for block-based predictive video decoding a video from a data stream using motion compensated prediction for inter-predicted blocks, configured to perform a once-per-picture boundary padding of a picture boundary extension area of a reference picture to obtain a pre-filling of the picture boundary extension area,
check whether the pre-filling of the picture boundary extension area at a portion of a motion compensated footprint of an inter-predicted block of a current picture, which extends beyond a boundary of the reference picture, fulfills a predetermined criterion,
if the portion fulfills the predetermined criterion, use the pre-filling for determining a predictor for the inter-predicted block, and
if the portion does not fulfill the predetermined criterion, perform an alternative boundary padding to fill the portion to obtain a further filling of the portion and use the further filling for determining the picture;
**characterised in that**
the apparatus is configured to perform the once-per-picture boundary padding by deriving a global transformation information on a linear transformation describing a global motion between a reference picture and a further picture of the video,
using the linear transformation, to derive the pre-filling of the picture boundary extension area of the reference picture using the further picture.

2. The apparatus according to claim 1, configured to perform the once-per-picture boundary padding on the basis of one or more further pictures using motion side information comprised by the data stream.

3. The apparatus according to claim 1 or 2, configured to perform the alternative boundary padding by selecting one of a plurality of intra-prediction modes and extrapolating the portion on the basis of boundary samples of the reference picture using the selected intra-prediction mode.

4. The apparatus according to any one of claims 1 to 3, wherein the predetermined criterion is determined by determining a quality measure within the portion or an area including the portion and a surrounding of the portion or the area including the portion and a further portion of the footprint overlapping the reference picture.

5. The apparatus according to any one of claims 1 to 4, wherein the predetermined criterion is determined by a quality measure indicative of a blockiness.

6. The apparatus according to any one of claims 1 to 5, configured to perform once-per-picture boundary padding by filling a first area of the picture boundary extension area using inter-prediction mode, and filling a second area of the picture boundary extension area using perpendicular intra-prediction mode,
wherein the predetermined criterion is determined by measuring a ratio at which the footprint overlaps with the first area and/or the second area, or
the number of samples of the footprint wherein the footprint overlaps the first or second area.

7. The apparatus according to any one of claims 1 to 6, configured to perform the once-per-picture boundary padding by using different prediction mode, technique for different areas of the picture boundary extension area, and wherein the predetermined criterion is determined based on a number of different areas with which the footprint overlaps.

8. The apparatus according to any one of claims 1 to 7, wherein the predetermined criterion is determined based on at least one of a size of the footprint, a distance between the footprint from boundary samples of the reference picture, and a number of amounts of boundary padding samples in the footprint.

9. Apparatus for block-based predictive video encoding a video from a data stream using motion compensated prediction for inter-predicted blocks, configured to perform a once-per-picture boundary padding of a picture boundary extension area of a reference picture to obtain a pre-filling of the picture boundary extension area,
check whether the pre-filling of the picture boundary extension area at a portion of a motion compensated footprint of an inter-predicted block of a current picture, which extends beyond a boundary of the reference picture, fulfills a predetermined criterion,
if the portion fulfills the predetermined criterion, use the pre-filling for determining a predictor for the inter-predicted block, and
if the portion does not fulfill the predetermined criterion, perform an alternative boundary padding to fill the portion to obtain a further filling of the portion and use the further filling for determining the picture,
**characterised in that**
the apparatus is configured to perform the once-per-picture boundary padding by deriving a global transformation information on a linear transformation describing a global motion between a reference picture and a further picture of the video,
using the linear transformation, to derive the pre-filling of the
picture boundary extension area of the reference picture using the further picture.

10. The apparatus according to claim 9, configured to perform the once-per-picture boundary padding on the basis of one or more further pictures using motion side information comprised by the data stream.

11. The apparatus according to claim 9 or 10, configured to perform the alternative boundary padding by selecting one of a plurality of intra-prediction modes and extrapolating the portion on the basis of boundary samples of the reference picture using the selected intra-prediction mode.

12. The apparatus according to any one of claims 9 to 11, wherein the predetermined criterion is determined by determining a quality measure within the portion or an area including the portion and a surrounding of the portion or the area including the portion and a further portion of the footprint overlapping the reference picture.

13. The apparatus according to any one of claims 9 to 12, wherein the predetermined criterion is determined by a quality measure indicative of a blockiness.

14. The apparatus according to any one of claims 9 to 13, configured to perform once-per-picture boundary padding by filling a first area of the picture boundary extension area using inter-prediction mode, and filling a second area of the picture boundary extension area using perpendicular intra-prediction mode,
wherein the predetermined criterion is determined by measuring a ratio at which the footprint overlaps with the first area and/or the second area, or
the number of samples of the footprint wherein the footprint overlaps the first or second area.

15. The apparatus according to any one of claims 9 to 14, configured to perform the once-per-picture boundary padding by using different prediction mode, technique for different areas of the picture boundary extension area, and wherein the predetermined criterion is determined based on a number of different areas with which the footprint overlaps.

16. The apparatus according to any one of claims 9 to 15, wherein the predetermined criterion is determined based on at least one of a size of the footprint, a distance between the footprint from boundary samples of the reference picture, and a number of amounts of boundary padding samples in the footprint.

## Patentansprüche

1. Vorrichtung zum blockbasierten prädiktiven Videodecodieren eines Videos aus einem Datenstrom unter Verwendung von bewegungskompensierter Prädiktion für inter-prädizierte Blöcke, ausgebildet zum
Durchführen eines Einmal-pro-Bild-Grenzauffüllens eines Bildgrenzerweiterungsbereichs eines Referenzbilds, um ein Vorfüllen des Bildgrenzerweiterungsbereichs zu erhalten,
Überprüfen, ob das Vorfüllen des Bildgrenzerweiterungsbereichs an einem Abschnitt eines bewegungskompensierten Fußabdrucks eines inter-prädizierten Blocks eines momentanen Bilds, das sich über eine Grenze des Referenzbilds hinaus erstreckt, ein vorbestimmtes Kriterium erfüllt,
wenn der Abschnitt das vorbestimmte Kriterium erfüllt, Verwenden des Vorfüllens zum Bestimmen eines Prädiktors für den inter-prädizierten Block und
wenn der Abschnitt das vorbestimmte Kriterium nicht erfüllt, Durchführen eines alternativen Grenzauffüllens, um den Abschnitt zu füllen, um ein weiteres Füllen des Abschnitts zu erhalten und das weitere Füllen zum Bestimmen des Bilds zu verwenden;
**dadurch gekennzeichnet, dass**
die Vorrichtung dazu ausgebildet ist, das Einmal-pro-Bild-Grenzauffüllen durchzuführen durch Herleiten einer Globaltransformationsinformation über eine Lineartransformation, die eine globale Bewegung zwischen einem Referenzbild und einem weiteren Bild des Videos beschreibt,
unter Verwendung der Lineartransformation, um das Vorfüllen des Bildgrenzerweiterungsbereichs des Referenzbilds unter Verwendung des weiteren Bilds herzuleiten.

2. Die Vorrichtung gemäß Anspruch 1, die dazu ausgebildet ist, das Einmal-pro-Bild-Grenzauffüllen auf der Basis von einem oder mehr weiteren Bildern unter Verwendung von Bewegungsnebeninformationen durchzuführen, die in dem Datenstrom enthalten sind.

3. Die Vorrichtung gemäß Anspruch 1 oder 2, die dazu ausgebildet ist, das alternative Grenzauffüllen durchzuführen durch Auswählen von einem einer Mehrzahl von Intra-Prädiktionsmodi und Extrapolieren des Abschnitts auf der Basis von Grenzabtastwerten des Referenzbilds unter Verwendung des ausgewählten Intra-Prädiktionsmodus.

4. Die Vorrichtung gemäß einem der Ansprüche 1 bis 3, bei der das vorbestimmte Kriterium bestimmt wird durch Bestimmen eines Qualitätsmaßes innerhalb des Abschnitts oder eines Bereichs mit dem Abschnitt oder einer Umgebung des Abschnitts oder des Bereichs mit dem Abschnitt und eines weiteren Abschnitts des Fußabdrucks, der das Referenzbild überlappt.

5. Die Vorrichtung gemäß einem der Ansprüche 1 bis 4, bei der das vorbestimmte Kriterium bestimmt wird durch ein Qualitätsmaß, das eine Blockhaftigkeit anzeigt.

6. Die Vorrichtung gemäß einem der Ansprüche 1 bis 5, die dazu ausgebildet ist, das Einmal-pro-Bild-Grenzauffüllen durchzuführen durch Füllen eines ersten Bereichs des Bildgrenzerweiterungsbereichs unter Verwendung des Inter-Prädiktionsmodus und Füllen eines zweiten Bereichs des Bildgrenzerweiterungsbereichs unter Verwendung des senkrechten Intra-Prädiktionsmodus,
wobei das vorbestimmte Kriterium bestimmt wird durch Messen eines Verhältnisses, mit dem der Fußabdruck den ersten Bereich und/oder den zweiten Bereich überlappt, oder
die Anzahl von Abtastwerten des Fußabdrucks, wobei der Fußabdruck den ersten oder zweiten Bereich überlappt.

7. Die Vorrichtung gemäß einem der Ansprüche 1 bis 6, die dazu ausgebildet ist, das Einmal-pro-Bild-Grenzauffüllen durchzuführen durch Verwenden eines unterschiedlichen Prädiktionsmodus, eine Technik für unterschiedliche Bereiche des Bildgrenzerweiterungsbereichs, und wobei das vorbestimmte Kriterium basierend auf einer Anzahl unterschiedlicher Bereiche bestimmt wird, mit denen der Fußabdruck überlappt.

8. Die Vorrichtung gemäß einem der Ansprüche 1 bis 7, bei der das vorbestimmte Kriterium basierend auf zumindest einem einer Größe des Fußabdrucks, einer Entfernung zwischen dem Fußabdruck und Grenzabtastwerten des Referenzbilds und einer Anzahl von Mengen von Grenzauffüllabtastwerten in dem Fußabdruck bestimmt wird.

9. Vorrichtung zum blockbasierten prädiktiven Videocodieren eines Videos aus einem Datenstrom unter Verwendung einer bewegungskompensierten Prädiktion für interprädizierte Blöcke, ausgebildet zum
Durchführen eines Einmal-pro-Bild-Grenzauffüllens eines Bildgrenzerweiterungsbereichs eines Referenzbilds, um ein Vorfüllen des Bildgrenzerweiterungsbereichs zu erhalten,
Überprüfen, ob das Vorfüllen des Bildgrenzerweiterungsbereichs an einem Abschnitt eines bewegungskompensierten Fußabdrucks eines inter-prädizierten Blocks eines momentanen Bilds, das sich über eine Grenze des Referenzbilds hinaus erstreckt, ein vorbestimmtes Kriterium erfüllt,
wenn der Abschnitt das vorbestimmte Kriterium erfüllt, Verwenden des Vorfüllens zum Bestimmen eines Prädiktors für den inter-prädizierten Block und
wenn der Abschnitt das vorbestimmte Kriterium nicht erfüllt, Durchführen eines alternativen Grenzauffüllens, um den Abschnitt zu füllen, um ein weiteres Füllen des Abschnitts zu erhalten und das weitere Füllen zum Bestimmen des Bilds zu verwenden;
**dadurch gekennzeichnet, dass**
die Vorrichtung dazu ausgebildet ist, das Einmal-pro-Bild-Grenzauffüllen durchzuführen durch Herleiten einer Globaltransformationsinformation über eine Lineartransformation, die eine globale Bewegung zwischen einem Referenzbild und einem weiteren Bild des Videos beschreibt,
unter Verwendung der Lineartransformation, um das Vorfüllen des Bildgrenzerweiterungsbereichs des Referenzbilds unter Verwendung des weiteren Bilds herzuleiten.

10. Die Vorrichtung gemäß Anspruch 9, die dazu ausgebildet ist, das Einmal-pro-Bild-Grenzauffüllen auf der Basis von einem oder mehr weiteren Bildern unter Verwendung von Bewegungsnebeninformationen durchzuführen, die in dem Datenstrom enthalten sind.

11. Die Vorrichtung gemäß Anspruch 9 oder 10, die dazu ausgebildet ist, das alternative Grenzauffüllen durchzuführen durch Auswählen von einem einer Mehrzahl von Intra-Prädiktionsmodi und Extrapolieren des Abschnitts auf der Basis von Grenzabtastwerten des Referenzbilds unter Verwendung des ausgewählten Intra-Prädiktionsmodus.

12. Die Vorrichtung gemäß einem der Ansprüche 9 bis 11, bei der das vorbestimmte Kriterium bestimmt wird durch Bestimmen eines Qualitätsmaßes innerhalb des Abschnitts oder eines Bereichs mit dem Abschnitt oder einer Umgebung des Abschnitts oder des Bereichs mit dem Abschnitt und eines weiteren Abschnitts des Fußabdrucks, der das Referenzbild überlappt.

13. Die Vorrichtung gemäß einem der Ansprüche 9 bis 12, bei der das vorbestimmte Kriterium bestimmt wird durch ein Qualitätsmaß, das eine Blockhaftigkeit anzeigt.

14. Die Vorrichtung gemäß einem der Ansprüche 9 bis 13, die dazu ausgebildet ist, das Einmal-pro-Bild-Grenzauffüllen durchzuführen durch Füllen eines ersten Bereichs des Bildgrenzerweiterungsbereichs unter Verwendung des Inter-Prädiktionsmodus und Füllen eines zweiten Bereichs des Bildgrenzerweiterungsbereichs unter Verwendung des senkrechten Intra-Prädiktionsmodus,
wobei das vorbestimmte Kriterium bestimmt wird durch Messen eines Verhältnisses, mit dem der Fußabdruck den ersten Bereich und/oder den zweiten Bereich überlappt, oder
die Anzahl von Abtastwerten des Fußabdrucks, wobei der Fußabdruck den ersten oder zweiten Bereich überlappt.

15. Die Vorrichtung gemäß einem der Ansprüche 9 bis 14, die dazu ausgebildet ist, das Einmal-pro-Bild-Grenzauffüllen durchzuführen durch Verwenden eines unterschiedlichen Prädiktionsmodus, eine Technik für unterschiedliche Bereiche des Bildgrenzerweiterungsbereichs, und wobei das vorbestimmte Kriterium basierend auf einer Anzahl unterschiedlicher Bereiche bestimmt wird, mit denen der Fußabdruck überlappt.

16. Die Vorrichtung gemäß einem der Ansprüche 9 bis 15, bei der das vorbestimmte Kriterium basierend auf zumindest einem einer Größe des Fußabdrucks, einer Entfernung zwischen dem Fußabdruck und Grenzabtastwerten des Referenzbilds und einer Anzahl von Mengen von Grenzauffüllabtastwerten in dem Fußabdruck bestimmt wird.

## Revendications

1. Appareil de décodage prédictif de vidéo à base de blocs d'une vidéo à partir d'un flux de données à l'aide d'une prédiction à compensation de mouvement pour des blocs inter-prédits, configuré pour
effectuer un rembourrage de limite une fois par image d'une zone d'extension de limite d'image d'une image de référence pour obtenir un pré-remplissage de la zone d'extension de limite d'image,
vérifier si le pré-remplissage de la zone d'extension de limite d'image au niveau d'une partie d'une empreinte compensée en mouvement d'un bloc inter-prédit d'une image actuelle qui s'étend au-delà d'une limite de l'image de référence remplit un critère prédéterminé,
si la partie remplit le critère prédéterminé, utiliser le pré-remplissage pour déterminer un prédicteur pour le bloc inter-prédit, et
si la partie ne remplit pas le critère prédéterminé, effectuer un rembourrage de limite alternatif pour remplir la partie pour obtenir un remplissage supplémentaire de la partie et utiliser le remplissage supplémentaire pour déterminer l'image;
**caractérisé par le fait que**
l'appareil est configuré pour effectuer le rembourrage de limite une fois par image en dérivant une information de transformation globale sur une transformation linéaire décrivant un mouvement global entre une image de référence et une autre image de la vidéo,
à l'aide de la transformation linéaire, dériver le pré-remplissage de la zone d'extension de limite d'image de l'image de référence à l'aide de l'autre image.

2. Appareil selon la revendication 1, configuré pour effectuer le rembourrage de limite une fois par image sur base d'une ou plusieurs autres images à l'aide de l'information latérale de mouvement comprise dans le flux de données.

3. Appareil selon la revendication 1 ou 2, configuré pour effectuer le rembourrage de limite alternatif en sélectionnant l'un parmi une pluralité de modes intra-prédiction et en extrapolant la partie sur base des échantillons de limite de l'image de référence à l'aide du mode intra-prédiction sélectionné.

4. Appareil selon l'une quelconque des revendications 1 à 3, dans lequel le critère prédéterminé est déterminé en déterminant une mesure de qualité dans la partie ou une zone comportant la partie et un environnement de la partie ou de la zone comportant la partie et une autre partie de l'empreinte venant en chevauchement avec l'image de référence.

5. Appareil selon l'une quelconque des revendications 1 à 4, dans lequel le critère prédéterminé est déterminé par une mesure de qualité indiquant un caractère de bloc.

6. Appareil selon l'une quelconque des revendications 1 à 5, configuré pour effectuer un rembourrage de limite une fois par image en remplissant une première zone de la zone d'extension de limite d'image à l'aide du mode inter-prédiction, et en remplissant une deuxième zone de la zone d'extension de limite d'image à l'aide du mode intra-prédiction perpendiculaire,
dans lequel le critère prédéterminé est déterminé en mesurant un rapport selon lequel l'empreinte vient en chevauchement avec la première zone et/ou la deuxième zone, ou
le nombre d'échantillons de l'empreinte dans lesquels l'empreinte vient en chevauchement avec la première ou la deuxième zone.

7. Appareil selon l'une quelconque des revendications 1 à 6, configuré pour effectuer le rembourrage de limite une fois par image à l'aide d'un mode de prédiction différent, d'une technique différente pour différentes zones de la zone d'extension de limite d'image, et dans lequel le critère prédéterminé est déterminé sur base d'un nombre de zones différentes avec lesquelles l'empreinte vient en chevauchement.

8. Appareil selon l'une quelconque des revendications 1 à 7, dans lequel le critère prédéterminé est déterminé sur base d'au moins un parmi une grandeur de l'empreinte, une distance entre l'empreinte et les échantillons de limite de l'image de référence, et un nombre de quantités d'échantillons de rembourrage de limite dans l'empreinte,

9. Appareil de codage prédictif de vidéo à base de blocs d'une vidéo à partir d'un flux de données à l'aide d'une prédiction à compensation de mouvement pour des blocs inter-prédits, configuré pour
effectuer un rembourrage de limite une fois par image d'une zone d'extension de limite d'image d'une image de référence pour obtenir un pré-remplissage de la zone d'extension de limite d'image,
vérifier si le pré-remplissage de la zone d'extension de limite d'image au niveau d'une partie d'une empreinte compensée en mouvement d'un bloc inter-prédit d'une image actuelle qui s'étend au-delà d'une limite de l'image de référence remplit un critère prédéterminé,
si la partie remplit le critère prédéterminé, utiliser le pré-remplissage pour déterminer un prédicteur pour le bloc inter-prédit, et
si la partie ne remplit pas le critère prédéterminé, effectuer un rembourrage de limite alternatif pour remplir la partie pour obtenir un remplissage supplémentaire de la partie et utiliser le remplissage supplémentaire pour déterminer l'image;
**caractérisé par le fait que**
l'appareil est configuré pour effectuer le rembourrage de limite une fois par image en dérivant une information de transformation globale sur une transformation linéaire décrivant un mouvement global entre une image de référence et une autre image de la vidéo,
à l'aide de la transformation linéaire, dériver le pré-remplissage de la zone d'extension de limite d'image de l'image de référence à l'aide de l'autre image.

10. Appareil selon la revendication 9, configuré pour effectuer le rembourrage de limite une fois par image sur base d'une ou plusieurs autres images à l'aide de l'information latérale de mouvement comprise dans le flux de données.

11. Appareil selon la revendication 9 ou 10, configuré pour effectuer le rembourrage de limite alternatif en sélectionnant l'un parmi une pluralité de modes intra-prédiction et en extrapolant la partie sur base des échantillons de limite de l'image de référence à l'aide du mode intra-prédiction sélectionné.

12. Appareil selon l'une quelconque des revendications 9 à 11, dans lequel le critère prédéterminé est déterminé en déterminant une mesure de qualité dans la partie ou une zone comportant la partie et un environnement de la partie ou de la zone comportant la partie et une autre partie de l'empreinte venant en chevauchement avec l'image de référence.

13. Appareil selon l'une quelconque des revendications 9 à 12, dans lequel le critère prédéterminé est déterminé par une mesure de qualité indiquant un caractère de bloc.

14. Appareil selon l'une quelconque des revendications 9 à 13, configuré pour effectuer un rembourrage de limite une fois par image en remplissant une première zone de la zone d'extension de limite d'image à l'aide du mode inter-prédiction, et en remplissant une deuxième zone de la zone d'extension de limite d'image à l'aide du mode intra-prédiction perpendiculaire,
dans lequel le critère prédéterminé est déterminé en mesurant un rapport selon lequel l'empreinte vient en chevauchement avec la première zone et/ou la deuxième zone, ou
le nombre d'échantillons de l'empreinte dans lesquels l'empreinte vient en chevauchement avec la première ou la deuxième zone.

15. Appareil selon l'une quelconque des revendications 9 à 14, configuré pour effectuer le rembourrage de limite une fois par image à l'aide d'un mode de prédiction différent, d'une technique différente pour différentes zones de la zone d'extension de limite d'image, et dans lequel le critère prédéterminé est déterminé sur base d'un nombre de zones différentes avec lesquelles l'empreinte vient en chevauchement.

16. Appareil selon l'une quelconque des revendications 9 à 15, dans lequel le critère prédéterminé est déterminé sur base d'au moins un parmi une grandeur de l'empreinte, une distance entre l'empreinte et les échantillons de limite de l'image de référence, et un nombre de quantités d'échantillons de rembourrage de limite dans l'empreinte.
